(19) Europäisches Patentamt
European Patent Office
Office européen des brevets

(11) **EP 4 138 436 A1**

(12) **EUROPEAN PATENT APPLICATION**
published in accordance with Art. 153(4) EPC

(43) Date of publication:
**22.02.2023 Bulletin 2023/08**

(21) Application number: **20930805.5**

(22) Date of filing: **17.04.2020**

(51) International Patent Classification (IPC):
**H04W 16/28** (2009.01)    **H04W 24/04** (2009.01)
**H04W 72/04** (2009.01)    **H04W 74/08** (2009.01)

(52) Cooperative Patent Classification (CPC):
**H04W 16/28; H04W 24/04; H04W 72/04;
H04W 74/08**

(86) International application number:
**PCT/JP2020/016966**

(87) International publication number:
**WO 2021/210182 (21.10.2021 Gazette 2021/42)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **NTT DOCOMO, INC.**
**Chiyoda-Ku**
**Tokyo 100-6150 (JP)**

(72) Inventors:
• **MATSUMURA, Yuki**
  **Tokyo 100-6150 (JP)**
• **NAGATA, Satoshi**
  **Tokyo 100-6150 (JP)**

(74) Representative: **Hoffmann Eitle**
**Patent- und Rechtsanwälte PartmbB**
**Arabellastraße 30**
**81925 München (DE)**

(54) **TERMINAL, WIRELESS COMMUNICATION METHOD, AND BASE STATION**

(57)    An aspect of a terminal of the present disclosure includes: a transmitting section that, when a beam failure is detected, transmits a contention-based random access preamble for recovery of the beam failure; and a control section that, in the case where an uplink control channel is transmitted in the period from when a given period has elapsed from the reception of a downlink control channel in a contention-based random access procedure for recovery of the beam failure to when information regarding uplink control channel spatial relation information is received, performs control to apply, to the uplink control channel, the same spatial filter as that for the random access preamble last transmitted in the cell where the uplink control channel is to be transmitted.

BASE STATION — RAR (MESSAGE 2) — MESSAGE 4

UE — PRACH — MESSAGE 3 — TIME

GIVEN PERIOD

FIRST TIMING          SECOND TIMING

FIG. 2

**Description**

Technical Field

The present disclosure relates to a terminal, a radio communication method, and a base station in next-generation mobile communication systems.

Background Art

In the universal mobile telecommunications system (UMTS) network, the specifications of long term evolution (LTE) have been drafted for the purpose of further increasing data rates, providing low delays, and so on (see Non Patent Literature 1). In addition, the specifications of LTE-Advanced (third generation partnership project (3GPP) Release (Rel.) 10 to 14) have been drafted for the purpose of further increasing capacity and advancement of LTE (3GPP Rel. 8 and 9).

Successor systems to LTE (for example, also referred to as 5th generation mobile communication system (5G), 5G+ (plus), New Radio (NR), or 3GPP Rel. 15 or later) are also being studied.

In existing LTE systems (LTE Rel. 8 to 14), radio link quality is monitored (radio link monitoring (RLM)). When a radio link failure (RLF) is detected by RLM, re-establishment of radio resource control (RRC) connection is requested of the user terminal (user equipment: UE).

Citation List

Non Patent Literature

Non Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April 2010

Summary of Invention

Technical Problem

In future radio communication systems (for example, NR), it has been studied to perform a procedure to detect a beam failure (BF) and switch to another beam (which may also be referred to as a beam failure recovery (BFR) procedure, BFR, and the like). Further, in the BFR procedure, in a case where a beam failure has occurred, the UE reports a beam failure recovery request (BFRQ) to request recovery from the beam failure.

It is studied to perform a BFR procedure by using a random access procedure. However, in the current specifications or definitions, even when a random access procedure for BFR is normally completed, there is a concern that a transmission parameter before the occurrence of the beam failure is applied during the period until a change/reconfiguration (for example, uplink channel transmission conditions or the like) is made by the network. As a result, communication quality may be degraded.

Therefore, an object of the present disclosure is to provide a terminal, a radio communication method, and a base station capable of properly controlling UL transmission after the BFR procedure.

Solution to Problem

A terminal according to an aspect of the present disclosure includes: a transmitting section that, when a beam failure is detected, transmits a contention-based random access preamble for recovery of the beam failure; and a control section that, in a case where an uplink control channel is transmitted in a period from when a given period has elapsed from reception of a downlink control channel in a contention-based random access procedure for recovery of the beam failure to when information regarding uplink control channel spatial relation information is received, performs control to apply, to the uplink control channel, the same spatial filter as a spatial filter for a random access preamble last transmitted in a cell where the uplink control channel is to be transmitted.

Advantageous Effects of Invention

According to one aspect of the present disclosure, a BFR procedure can be properly performed even when a priority is set to any transmission in the BFR procedure.

Brief Description of Drawings

Fig. 1 is a diagram illustrating an example of a BFR procedure in Rel. 15 NR.
Fig. 2 is a diagram illustrating an example of a BFR procedure and UL channel transmission control according to the present embodiment.
Fig. 3 is a diagram illustrating another example of a BFR procedure and UL channel transmission control according to the present embodiment.
Fig. 4 is a diagram illustrating an example of a schematic configuration of a radio communication system according to an embodiment.
Fig. 5 is a diagram illustrating an example of a configuration of a base station according to an embodiment.
Fig. 6 is a diagram illustrating an example of a configuration of a user terminal according to an embodiment.
Fig. 7 is a diagram illustrating an example of a hardware configuration of a base station and a user terminal according to an embodiment.

Description of Embodiments

<Beam failure recovery>

In NR, communication using beam forming has been studied. For example, a UE and a base station (for example, gNodeB (gNB)) may use a beam used for signal transmission (which is also referred to as a transmission beam, a Tx beam, or the like) or a beam used for signal reception (which is also referred to as a reception beam, an Rx beam, or the like).

In a case where beam forming is used, degradation of radio link quality is assumed because it becomes susceptible to interference by an obstacle. A radio link failure (RLF) may frequently occur due to degradation of the radio link quality. When the RLF occurs, cell re-connection is required, and thus frequent occurrence of the RLF leads to degradation of system throughput.

In the NR, to suppress the occurrence of the RLF, it has been studied to perform a procedure of switching to another beam (which may also be referred to as beam recovery (BR), beam failure recovery (BFR), Layer 1/Layer 2 (L1/L2) beam recovery, or the like) in a case where quality of a specific beam degrades. The BFR procedure may be simply referred to as BFR.

Note that a beam failure (BF) in the present disclosure may be referred to as a link failure, a radio link failure (RLF).

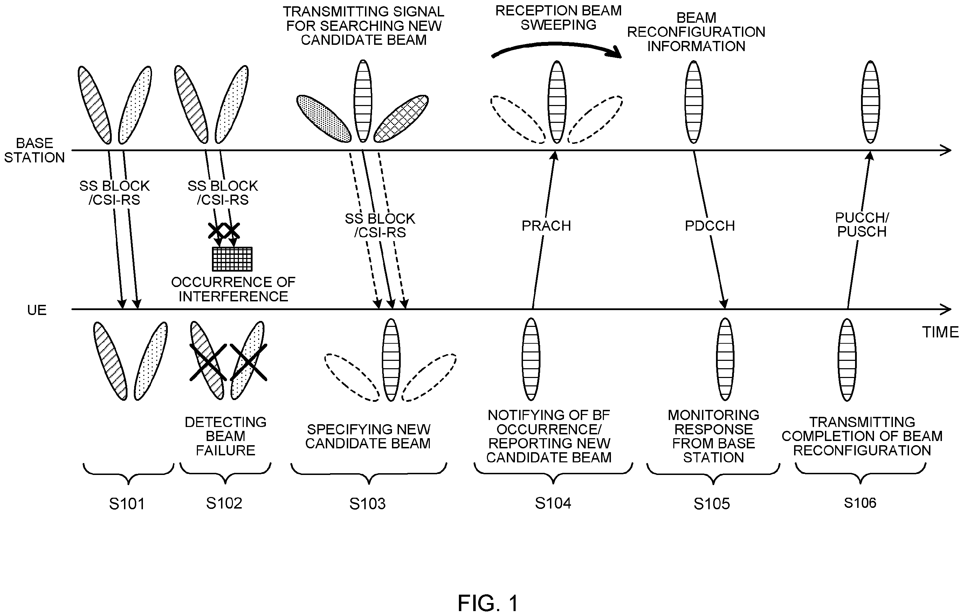

Fig. 1 is a diagram illustrating an example of a beam recovery procedure in Rel. 15 NR. The number of beams, or the like, is an example, and is not limited thereto. In an initial state (step S101) in Fig. 1, the UE performs measurement based on a reference signal (RS) resource transmitted using two beams.

The RS may be at least one of a synchronization signal block (SSB) or a channel state information RS (CSI-RS). Note that an SSB may also be referred to as an SS/physical broadcast channel (PBCH) block, or the like.

The RS may be at least one of a primary synchronization signal (primary SS (PSS)), a secondary synchronization signal (secondary SS (SSS)), a mobility reference signal (mobility RS (MRS)), a signal included in an SSB, the SSB, a CSI-RS, a demodulation reference signal (DMRS), a beam-specific signal, or the like, or a signal configured by extending or changing these. The RS measured in step S101 may be referred to as an RS for beam failure detection (beam failure detection RS (BFD-RS)), or the like.

In step S102, interference in radio waves from the base station occurs, whereby the UE cannot detect the BFD-RS (or reception quality of the RS degrades). Such interference may occur due to, for example, an effect of an obstacle between the UE and the base station, fading, interference, or the like.

After a given condition is satisfied, the UE detects a beam failure. For example, the UE may detect occurrence of a beam failure in a case where a block error rate (BLER) is less than a threshold value for all of the configured BFD-RS (BFD-RS resource configurations). When the occurrence of the beam failure is detected, a lower layer (physical (PHY) layer) of the UE may perform notification (indication) of a beam failure instance to a higher layer (MAC layer).

Note that a criterion for determination is not limited to the BLER, and may be reference signal received power in a physical layer (Layer 1 reference signal received power (L1-RSRP)). Further, instead of RS measurement or in addition to RS measurement, beam failure detection may be performed on the basis of a downlink control channel (physical downlink control channel (PDCCH)) or the like. The BFD-RS may be expected to be in a quasi-co-location (QCL) with a DMRS of the PDCCH monitored by the UE.

Here, the QCL is an indicator indicating a statistical property of a channel. For example, in a case where one signal/channel and another signal/channel have a QCL relation, this may mean that it is possible to assume that these multiple different signals/channels have at least one identical property out of a Doppler shift, a Doppler spread, an average delay, a delay spread, or a spatial parameter (for example, spatial Rx filter/parameter, spatial Tx (transmission) filter/parameter) (a QCL relation is established regarding at least one of these).

Note that, the spatial Rx parameter may correspond to a reception beam of the UE (for example, a reception analog beam), and the beam may be specified on the basis of spatial QCL. The QCL (or at least one element of the QCL) in the present disclosure may be replaced with the spatial QCL (sQCL).

Information regarding the BFD-RS (for example, an RS index, resource, number, number of ports, precoding, or the like), information regarding beam failure detection (BFD) (for example, the above-described threshold value), or the like may be configured in (notified to) the UE by using higher layer signaling, or the like. The information regarding the BFD-RS may also be referred to as information regarding a resource for BFR, or the like.

In the present disclosure, higher layer signaling may be, for example, any of radio resource control (RRC) signaling, medium access control (MAC) signaling, broadcast information, and the like, or a combination thereof.

For example, a MAC control element (CE), a MAC protocol data unit (PDU), or the like may be used for the MAC signaling. The broadcast information may be, for example, a master information block (MIB), a system information block (SIB), remaining minimum system information (RMSI), other system information (OSI), and the like.

The MAC layer of the UE may start a given timer (which may also be referred to as a beam failure detection timer) in a case where a beam failure instance notification is received from the PHY layer of the UE. The MAC layer of the UE may trigger BFR (for example, start any one of random access procedures to be described later) after receiving the beam failure instance notification a certain number of times (for example, beamFailureInstanceMaxCount configured by RRC) or more before the timer expires.

The base station may determine that the UE has detected a beam failure in a case where there is no notification from the UE (for example, time for which there is no notification exceeds a given time) or in a case where a given signal (beam recovery request in step S104) is received from the UE.

In Step S103, for beam recovery, UE starts a search for a new candidate beam to be newly used for communication. The UE may measure a given RS to select a new candidate beam corresponding to the RS. The RS measured in step S103 may be referred to as a new candidate beam identification RS (NCBI-RS), a CBI-RS, a candidate beam RS (CB-RS), or the like. The NCBI-RS may be the same as or different from the BFD-RS. Note that the new candidate beam may be referred to as a new candidate beam, a candidate beam, or a new beam.

The UE may determine a beam corresponding to an RS that satisfies a given condition as a new candidate beam. The UE may determine a new candidate beam on the basis of, for example, an RS whose L1-RSRP exceeds a threshold value among configured NCBI-RSs. Note that a criterion for determination is not limited to L1-RSRP. The determination may be made using at least any one of L1-RSRP, L1-RSRQ, or L1-SINR (signal to noise interference power ratio). L1-RSRP regarding an SSB may also be referred to as SS-RSRP. L1-RSRP regarding a CSI-RS may also be referred to as CSI-RSRP. Similarly, L1-RSRQ regarding an SSB may also be referred to as SS-RSRQ. L1-RSRQ regarding a CSI-RS may also be referred to as CSI-RSRQ. Further, similarly, L1-SINR regarding an SSB may be referred to as SS-SINR. L1-SINR regarding a CSI-RS may be referred to as CSI-SINR.

Information regarding an NCBI-RS (for example, an RS resource, number, number of ports, precoding, or the like), information regarding new candidate beam identification (NCBI) (for example, the above-described threshold value), or the like may be configured in (notified) the UE using higher layer signaling, or the like. The information regarding the NCBI-RS may be acquired on the basis of the information regarding the BFD-RS. The information regarding the NCBI-RS may also be referred to as information regarding an NCBI resource, or the like.

Note that the BFD-RS, NCBI-RS, or the like may be replaced with a radio link monitoring reference signal (RLM-RS).

In step S104, the UE that has specified the new candidate beam transmits a beam recovery request (beam failure recovery request (BFRQ)). A Beam Failure Recovery reQuest may also be referred to as a beam recovery request signal, a beam failure recovery request signal, or the like.

The BFRQ may be transmitted using, for example, a physical random access channel (PRACH). The BFRQ may include information on the new candidate beam specified in step S103. A resource for the BFRQ may be associated with the new candidate beam. Notification of the information on the beam may be performed using, for example, a beam index (BI), a port index of a given reference signal, a resource index (for example, CSI-RS resource indicator (CRI), SSB resource indicator (SSBRI)), or the like.

In the Rel. 15 NR, contention-based BFR (CB-BFR) that is BFR based on a contention-based random access (RA) procedure and contention-free BFR (CF-BFR) that is BFR based on a non-contention based random access procedure have been supported. In the CB-BFR or the CF-BFR, the UE may transmit a preamble (which is also referred to as an RA preamble, a physical random access channel (PRACH), an RACH preamble, or the like) as the BFRQ by using a PRACH resource.

In step S105, the base station that has detected the BFRQ transmits a response signal (which may also be referred to as a "BFR response", "gNB response" or the like) for the BFRQ from the UE. The response signal may include reconfiguration information (for example, DL-RS resource configuration information) for one or a plurality of beams.

The response signal may be transmitted, for example, in a UE common search space of a PDCCH. Notification of the response signal may be performed using a PDCCH (DCI) with a cyclic redundancy check (CRC) scrambled by an identifier of the UE (for example, a cell-radio RNTI (C-RNTI)). The UE may determine at least one of a transmission beam or a reception beam to be used, on the basis of beam reconfiguration information.

The UE may monitor the response signal on the basis of at least either a control resource set (CORESET) for BFR or a search space set for BFR. For example, the UE may detect the DCI with the CRC scrambled with the C-RNTI in the BFR search space in a CORESET individually configured.

For the CB-BFR, contention resolution may be determined to be successful in a case where the UE receives a PDCCH corresponding to the C-RNTI regarding the UE itself.

Regarding the processing in step S105, a period may be set for the UE to monitor a response from the base station (for example, gNB) for the BFRQ. The period may also be referred to as, for example, a gNB response window, a gNB window, a beam recovery request response window, a BFRQ response window, or the like. The UE may retransmit the BFRQ in a case where no gNB response is detected within the window period.

In step S106, the UE may transmit a message indicating that beam reconfiguration is completed to the base station. The message may be transmitted by the PUCCH or PUSCH, for example.

In step S106, the UE may receive RRC signaling indicating a configuration of a transmission configuration indication (TCI) state used for the PDCCH, or may receive a MAC CE indicating activation of the configuration.

Beam recovery success (BR success) may represent a case where step S106 is reached, for example. On the other hand, beam recovery failure (BR failure) may correspond to, for example, a case where the number of times of BFRQ transmission has reached a given number, or a beam-failure-recovery-timer has expired.

Note that numbers of these steps are merely numbers for description, and a plurality of these steps may be combined, or the order of these steps may be changed. Further, whether or not to perform BFR may be configured in the UE by using higher layer signaling.

On the other hand, when performing a BFR procedure using random access (for example, a contention-based random access procedure) (CB-BFR), the UE performs PRACH transmission via a new beam. On the other hand, there is a concern that a PUCCH (for example, a PUCCH for A/N on an MAC CE) is transmitted via a beam before the occurrence of the beam failure (a failed beam).

For example, it is also conceivable that, even when a contention-based random access procedure for BFR is normally completed, the UL channel (for example, PUCCH) spatial relation is not updated/reconfigured. When the PUCCH spatial relation is not updated after a BFR (for example, CB-BFR) procedure is normally ended, the UE performs PUCCH transmission on the basis of a transmission parameter applied before the occurrence of the beam failure (or before the notification of the beam failure).

In this case, even when the BFR procedure has succeeded, the UE necessarily uses the failed beam during the period until the UL channel spatial relation is updated/reconfigured, and UL channel transmission may not be properly performed and communication quality may be degraded.

The present inventors have focused on the fact that even when a BFR procedure (for example, notification of beam failure detection) is performed upon detection of a beam failure, there is a period in which the UL channel spatial relation is not changed/reconfigured, and have conceived the idea of applying a given spatial relation in the period.

Hereinafter, embodiments according to the present disclosure will be described in detail with reference to the drawings. The following aspects may be applied independently or may be applied in combination. Although the following description is given using transmission of an uplink control channel as an example, the present disclosure may be applied to other channels/signals.

In the present disclosure, "A/B" and "at least one of A or B" may be interchangeable.

In the present disclosure, the beam, the TCI state, the QCL assumption, the QCL parameter, the spatial filter, and the spatial domain filter may be replaced with each other. In the present disclosure, the index, the ID, the indicator, the resource ID, and the like may be replaced with each other.

In the present disclosure, a cell, a CC, a carrier, a BWP, an active DL BWP, an active UL BWP, and a band may be interchangeable. In the present disclosure, an RRC parameter, a higher layer parameter, an RRC information element (IE), and an RRC message may be interchangeable.

(Radio communication method)

When detecting a beam failure and performing a random access procedure for beam failure recovery, the UE may determine the spatial relation/QCL relation/TCI state in a given period on the basis of a given rule.

For example, the operation in the case where a non-contention-based random access procedure is used as a BFR procedure and the operation in the case where a contention-based random access procedure is used may be prescribed in a clearly distinguished manner.

<Non-contention-based random access procedure>

For a non-contention-based random access procedure for a PCell or a PSCell, after 28 symbols have elapsed from the last symbol of the first PDCCH reception in which the UE detects a DCI format CRC-scrambled by a C-RNTI or an MCS-C-RNTI in a configured search space set, the UE may, for PDCCH monitoring in a CORESET with index 0, assume the quasi co-location parameter of the same antenna port as that associated with index $q_{new}$ (For the PCell or the PSCell CFRA, after 28 symbols from a last symbol of a first PDCCH reception in a search space set provided by recoverySearchSpaceId where a UE detects a DCI format with CRC scrambled by C-RNTI or MCS-C-RNTI, the UE assumes same antenna port quasi-collocation parameters as the ones associated with index $q_{new}$ for PDCCH monitoring in a CORESET with index 0.).

$q_{new}$ may be an index of a new beam (for example, an SSB/CSI-RS) selected by the UE in the BFR procedure and reported on a corresponding PRACH (or an index of a new candidate beam found in the BFR procedure). The UE may control PUCCH transmission on the basis of $q_{new}$ during the period from when a non-contention-based random access procedure for BFR is normally completed to when the uplink control channel spatial relation information is updated/reconfigured.

For example, the UE performs control such that the above-mentioned operation is applied to a BFR procedure using a non-contention-based random access procedure and is not applied to a BFR procedure using a contention-based random access procedure.

<Contention-based random access procedure>

When detecting a beam failure and performing a random access procedure for beam failure recovery, the UE may apply a given transmission condition (for example, a given spatial relation, a given transmission power, etc.) to UL channels (for example, PUCCHs) transmitted in a given period.

The given period may be a period from after a first timing to a second timing. The time after the first timing may be at least one of a time after the completion (for example, successful completion) of a contention-based random access procedure for beam failure recovery and a time after when a given number of symbols have elapsed from the reception of a downlink control channel in a contention-based random access procedure. The given number of symbols may be, for example, 28 symbols.

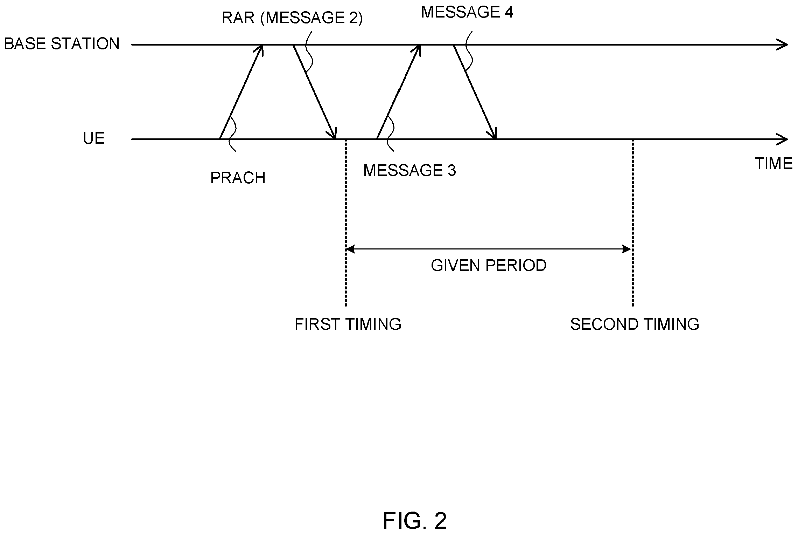

The downlink control channel may be a downlink control channel transmitted in response to a random access preamble, or a downlink control channel used for transmission of DCI CRC-scrambled by an RNTI for random access (for example, an RA-RNTI). The downlink control channel transmitted in response to a random access preamble may be a downlink control channel used for scheduling of a random access response (an RAR or message 2) (see Fig. 2). Note that the random access response may be referred to as a BFR response.

Alternatively, the downlink control channel may be a downlink control channel used for transmission of DCI CRC-scrambled by an RNTI (for example, a TC-RNTI or an MsgB-RNTI) other than the RA-RNTI.

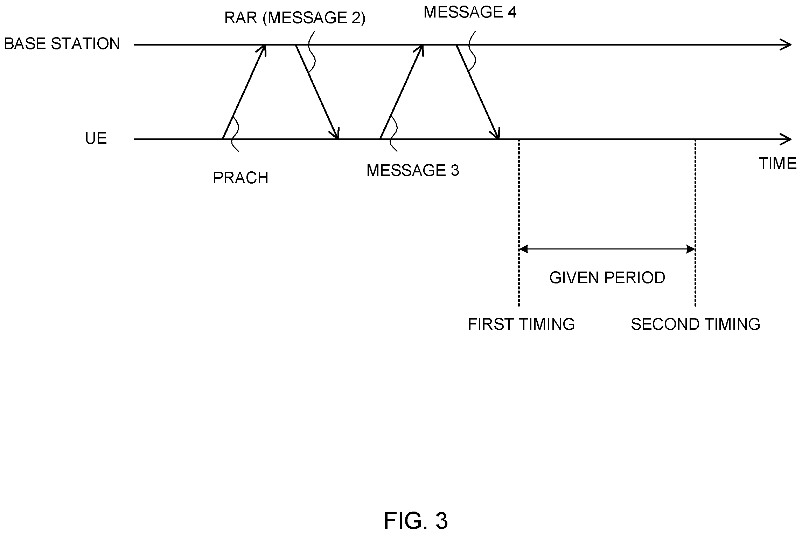

Alternatively, the downlink control channel may be a downlink control channel corresponding to message 4 in a contention-based random access procedure, or a downlink control channel used for transmission of downlink control information CRC-scrambled by a cell-specific RNTI (for example, a cell radio network temporary identifier (C-RNTI)) (see Fig. 3). In this case, since the UE applies a given spatial relation to PUCCH transmission after contention resolution, the UE can make limitation to a PUCCH transmitted upon BFR completion as PUCCH transmission to which the given spatial relation is applied. Thereby, both the base station and the UE can control PUCCH transmission after recognizing BFR completion. Further, the downlink control channel used for transmission of downlink control information CRC-scrambled by the specific RNTI may be a downlink control channel received after a downlink control channel corresponding to message 4 in a contention-based random access procedure.

The second timing may be a case satisfying one or both of the time of receiving information regarding uplink control channel spatial relation information and the time of providing PUCCH spatial relation information to the PUCCH resource. The information regarding uplink control channel spatial relation information may be an activation command for PUCCH spatial relation information.

The given spatial relation may be the same spatial filter as the spatial filter used for transmission of the random access preamble last transmitted by the UE in a serving cell where PUCCH transmission is to be performed (or the newest random access preamble).

When transmitting a PUCCH in the period from when a given number of symbols have elapsed from the reception of a downlink control channel in a contention-based random access procedure for beam failure recovery to when information regarding PUCCH spatial relation information is received, the UE may perform control to apply, to the PUCCH, the same spatial filter as that for the random access preamble last transmitted in the cell where the PUCCH is to be transmitted.

More specifically, for a PCell or a PSCell, after a contention-based random access procedure for beam failure recovery is normally completed, the UE may use the following transmission conditions when transmitting a PUCCH in one serving cell during the period from when 28 symbols have elapsed from the last symbol of the first PDCCH reception in which the UE detects a DCI format CRC-scrambled by an RA-RNTI to when the UE receives an activation command for PUCCH spatial relation information and PUCCH spatial relation information is provided to the PUCCH resource.

- The same spatial filter as the spatial filter for the last PRACH transmission is used in the serving cell.
- The transmission power is determined by using $q_u = 0$, $q_d = q_{newCBRA}$, and $1 = 0$ in a formula used to determine the PUCCH transmission power (Subclause 7.2.1). $q_{newCBRA}$ corresponds to an index of a synchronization signal block provided by a higher layer (For the PCell or the PSCell, after successful completion of contention based random access procedure for beam failure recovery, after 28 symbols from a last symbol of a first PDCCH reception where the UE detects a DCI format with CRC scrambled by RA-RNTI and until the UE receives an activation command for PUCCH-SpatialRelationInfo and if PUCCH-SpatialRelationInfo is provided for PUCCH resource(s), the UE transmits a PUCCH on the serving cell using

  - a same spatial filter as for the last PRACH transmission on the serving cell
  - a power determined as described in Subclause 7.2.1 with $q_u=0$, $q_d=q_{newcBRA}$, and l=0, and

  where $q_{newCBRA}$ is the SS/PBCH block index provided by higher layers.).

Thus, in the case where a contention-based random access procedure for beam failure recovery is performed, a degradation in communication quality can be suppressed by applying a specific transmission condition (for example, a specific spatial relation, a specific transmission power, etc.) during the period until the PUCCH spatial relation information is updated/reconfigured.

<Transmission power control for PUCCH>

The transmission power of a PUCCH may be controlled based on a TPC command (also called value, increase-decrease value, correction value, instruction value, or the like) indicated by the value of a given field (also called TPC command field, first field, or the like) in the DCI.

For example, using index 1 of a power control adjustment state (PUCCH power control adjustment state), the PUCCH transmission power ($P_{PUCCH\,b,f,c}(i, q_u, q_d, l)$) in PUCCH transmission occasion (also referred to as PUCCH transmission period or the like) i for active UL BWP b of carrier f of serving cell c may be expressed by Formula (1) below. The power control adjustment state may be referred to as a value based on TPC commands of power control adjustment state index l, the accumulated value of TPC commands, or a value based on a closed loop. 1 may be referred to as a closed loop index.

The PUCCH transmission occasion i is a period during which the PUCCH is transmitted, and may be composed of, for example, one or more symbols, one or more slots, and the like.

[Math 1]

```
Formula (1)
```

$$P_{\mathrm{PUCCH},b,f,c}(i, q_u, q_d, l)$$

$$= min \begin{cases} P_{\mathrm{CMAX},f,c}(i), \\ P_{\mathrm{O\_PUCCH},b,f,c}(q_u) + 10\,log_{10}(2^\mu \cdot M_{\mathrm{RB},b,f,c}^{\mathrm{PUCCH}}(i)) + PL_{b,f,c}(q_d) + \Delta_{\mathrm{F\_PUCCH}}(F) + \Delta_{\mathrm{TF},b,f,c}(i) + g_{b,f,c}(i,l) \end{cases}$$

Here, $P_{CMAX,f,c(i)}$ is, for example, transmission power (also referred to as maximum transmission power, UE maximum output power, or the like) of the user terminal set for the carrier f of the serving cell c in the transmission occasion i. $P_{O\_PUCCH,b,f,c}(q_u)$ is, for example, a parameter related to a target received power configured for the active UL BWP b of the carrier f of serving cell c on the transmission occasion i (for example, a parameter related to a transmission power offset, a transmission power offset P0, or a target received power parameter, or the like).

$M^{PUCCH}_{RB,b,f,c}(i)$ is, for example, the number of resource blocks (bandwidth) allocated to a PUCCH for the transmission occasion i in the active UL BWP b of the carrier f of serving cell c and the subcarrier interval $\mu$. $PL_{b,f,c}(q_d)$ is, for example, a Path-loss (Path-loss estimation [dB] or Path-loss compensation) calculated by the user terminal by using index $q_d$ of a reference signal (a Path-loss reference RS, an RS for Path-loss reference, a DL-RS for Path-loss measurement, or PUCCH-PathlossReferenceRS) for a downlink BWP associated with active UL BWP b of carrier f of serving cell c.

If the UE is not provided with a Path-loss reference RS (pathlossReferenceRSs), or before the UE is provided with a dedicated higher layer parameter, the UE calculates the Path-loss $PL_{b,f,c}(q_d)$ by using an RS resource obtained from an SS/PBCH block that the UE uses to obtain an MIB.

If the UE is provided with Path-loss reference RS information (pathlossReferenceRSs in PUCCH power control information (PUCCH-PowerControl)) and is not provided with PUCCH spatial relation information (PUCCH-SpatialRelationInfo), the UE obtains the value of a reference signal (referencesignal) in a PUCCH Path-loss reference RS from a PUCCH Path-loss reference RS-ID (PUCCH-PathlossReferenceRS-Id) having index 0 in PUCCH Path-loss reference RS information (PUCCH-PathlossReferenceRS). The resource of this reference signal is present either on the same serving cell or on, if given, a serving cell indicated by the value of Path-loss reference linking information (pathlossReferenceLinking). The Path-loss reference linking information indicates which DL, either that of a special cell (SpCell) or that of a secondary cell (SCell) corresponding to the UL, the UE applies as a Path-loss reference. The SpCell may be a primary cell (PCell) in a master cell group (MCG) or a primary secondary cell (PSCell) in a secondary cell group (SCG). The Path-loss reference RS information indicates a set of reference signals (for example, CSI-RS configurations or SS/PBCH blocks) used for PUCCH Path-loss estimation.

$\Delta_{F\_PUCCH}(F)$ is a higher layer parameter given for every PUCCH format. $\Delta_{TF,b,f,c}(i)$ is a transmission power adjustment component (offset) for the UL BWP b of the carrier f of serving cell c.

$g_{b,f,c}(i, l)$ is a value based on TPC commands of the above-mentioned power control adjustment state index 1 of the active UL BWP of carrier f of serving cell c and transmission occasion i (for example, a power control adjustment state, the accumulated value of TPC commands, a value based on a closed loop, or a PUCCH power adjustment state). For example, $g_{b,f,c}(i, 1)$ may be expressed by Formula (2).

[Math 2]

$$\text{Formula (2)}$$

$$g_{b,f,c}(i, l) = g_{b,f,c}(i - i_0, l) + \sum_{m=0}^{C(c_i)-1} \delta_{\text{PUCCH},b,f,c}(m, l)$$

Here, $\delta_{\text{PUCCH},b,f,c}(i, 1)$ is a TPC command value, and may be included in DCI format 1_0 or DCI format 1_1 that the UE detects on PUCCH transmission occasion i of active UL BWP b of carrier f of serving cell c, or may be combined and encoded with another TPC command in DCI format 2_2 having a CRC scrambled by a specific radio network temporary identifier (RNTI) (for example, a TPC-PUSCH-RNTI) .

$\Sigma_{m=0}^{C(Ci)-1}\delta_{\text{PUCCH},b,f,c}(m, 1)$ may be the sum of the TPC command values in a set $C_i$ of TPC command values having a cardinality of $C(C_i)$. $C_i$ may be a set of TPC command values that, for PUCCH power control adjustment state l, the UE receives between before the $K_{\text{PUCCH}}(i-i_0)-1$ symbol of PUCCH transmission occasion $i-i_0$ and before the $K_{\text{PUCCH}}(i)$ symbol of PUSCH transmission occasion i of active UL BWP b of carrier f of serving cell c. io may be the smallest positive integer with which the time before the $K_{\text{PUCCH}}(i-io)$ symbol of PUSCH transmission occasion $i-i_0$ is set earlier than the time before the $K_{\text{PUCCH}}(i)$ symbol of PUSCH transmission occasion i.

If PUCCH transmission responds to the detection of DCI format 1_0 or DCI format 1_1 by the UE, $K_{\text{PUCCH}}(i)$ may be the number of symbols in active UL BWP b of carrier f of serving cell c included in the period after the last symbol of the corresponding PDCCH reception and before the first symbol of the PUCCH transmission in question. If PUCCH transmission is configured by configured grant configuration information (ConfiguredGrantConfig), $K_{\text{PUSCH}}(i)$ may be the number of $K_{\text{PUCCH,min}}$ symbols that is equal to the product of the number of symbols per slot $N_{\text{symb}}^{\text{slot}}$ and the minimum value of the values provided by k2 in PUSCH common configuration information (PUSCH-ConfigCommon) in active UL BWP b of carrier f of serving cell c.

If the UE is provided with information indicating that two PUCCH power control adjustment states are used (twoPUCCH-PC-AdjustmentStates) and PUCCH spatial relation information (PUCCH-SpatialRelationInfo), 1 = {0, 1}; and if the UE is not provided with both of information indicating that two PUCCH power control adjustment states are used and PUCCH spatial relation information, 1 = 0 is possible.

If the UE obtains a TPC command value from DCI format 1_0 or 1_1 and if the UE is provided with PUCCH spatial relation information, the UE may obtain mapping between a PUCCH spatial relation information ID (pucch-SpatialRelationInfoId) value and a closed loop index (closedLoopIndex, or power adjustment state index 1) by means of an index provided by a PO-for-PUCCHs ID (p0-PUCCH-Id in p0-Set in PUCCH-PowerControl in PUCCH-Config). When the UE has received an activation command including the value of a PUCCH spatial relation information ID, the UE may determine the value of a closed loop index that provides the value of 1 through a link to a corresponding PO-for-PUCCHs ID.

If the UE is provided with, for active UL BWP b of carrier f of serving cell c, a configuration of the $P_{O\_PUCCH,b,f,c}(q_u)$ value for the corresponding PUCCH power adjustment state 1 by a higher layer, $g_{b,f,c}(i, l) = 0$, and $k = 0, 1,..., i$. If the UE is provided with PUCCH spatial relation information, the UE may determine the value of 1 from the value of $q_u$ on the basis of PUCCH spatial relation information associated with a PO-for-PUCCHs ID corresponding to $q_u$ and a closed loop index value corresponding to 1.

$q_u$ may be a PO-for-PUCCHs ID (p0-PUCCH-Id) indicating a P0 for PUCCHs (P0-PUCCH) in a PO-for-PUCCHs set (p0-Set).

Formulae (1) and (2) are merely examples and are not limitation. The user terminal have only to control the transmission power of the PUCCH based on at least one parameter exemplified in equations (1) and (2) and may include an additional parameter, or a part of parameters may be omitted. Further, in above equations (1) and (2), the transmission power of the PUCCH is controlled for every active UL BWP of a certain carrier in a certain serving cell, but is not limited to this. At least a part of the serving cell, the carrier, the BWP, and the power control adjustment state may be omitted.

It will now be assumed that PUCCH transmission is performed during the period from when a given number of symbols have elapsed from the reception of a downlink control channel in a contention-based random access procedure for beam failure recovery/when a random access procedure is completed and to when information regarding PUCCH spatial relation information is received/when PUCCH spatial relation information is configured for the PUCCH resource. In such a case, the UE may determine the PUCCH transmission power by using given parameters in Formulae (1) and (2). The given parameters may be $q_u = 0$, $q_d = q_{newCBRA}$, and $1 = 0$. $q_{newCBRA}$ may be an index of a synchronization signal block provided by a higher layer, or may be an index of a synchronization signal block corresponding to a PRACH transmitted for BFR notification.

Thus, in the case where a contention-based random access procedure for beam failure recovery is performed, a degradation in communication quality can be suppressed by applying a specific transmission power during the period until the PUCCH spatial relation information is updated/reconfigured.

<After updating/reconfiguration of PUCCH spatial relation information>

When the PUCCH spatial relation information is updated/reconfigured, the UE may control PUCCH transmission after the BFR procedure by using the updated/reconfigured spatial relation information.

For example, in the case where a random access procedure for BFR is completed, PUCCH spatial relation information for PUCCHs is provided, and a given condition is satisfied, the UE may perform PUCCH transmission in a PUCCH-SCell by using the same spatial filter as the spatial filter corresponding to $q_{new}$ for a reference signal.

Note that when PUCCH spatial relation information for PUCCHs (PUCCH-SpatialRelationInfo) is not provided/configured, the UE may not update the assumption of PUCCH spatial relation information after the completion of the BFR procedure. In this case, PUCCH transmission may be controlled on the basis of default spatial relation information. The default spatial relation information is associated with the PDCCH TCI state; thus, when the PDCCH TCI state is updated by the completion of a BFR procedure, also the default spatial relation is updated, and therefore PUCCH transmission can be performed while applying an appropriate spatial relation.

(Radio Communication System)

Hereinafter, a configuration of a radio communication system according to one embodiment of the present disclosure will be described. In this radio communication system, communication is performed using one or a combination of the radio communication methods according to the embodiments of the present disclosure.

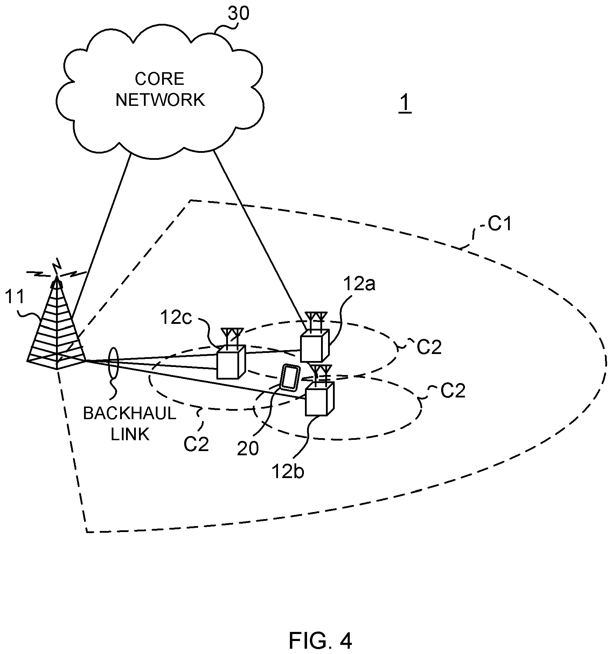

Fig. 4 is a diagram illustrating an example of a schematic configuration of a radio communication system according to one embodiment. A radio communication system 1 may be a system that implements communication using long term evolution (LTE), 5th generation mobile communication system New Radio (5G NR), and the like drafted as the specification by third generation partnership project (3GPP).

Further, the radio communication system 1 may support dual connectivity (multi-RAT dual connectivity (MR-DC)) between a plurality of radio access technologies (RATs). The MR-DC may include dual connectivity between LTE (evolved universal terrestrial radio access (E-UTRA)) and NR (E-UTRA-NR dual connectivity (EN-DC)), dual connectivity between NR and LTE (NR-E-UTRA Dual Connectivity (NE-DC)), and the like.

In the EN-DC, an LTE (E-UTRA) base station (eNB) is a master node (MN), and an NR base station (gNB) is a secondary node (SN). In the NE-DC, an NR base station (gNB) is MN, and an LTE (E-UTRA) base station (eNB) is SN.

The radio communication system 1 may support dual connectivity between a plurality of base stations in the same RAT (for example, dual connectivity in which both MN and SN are NR base stations (gNB) (NR-NR dual connectivity (NN-DC))).

The radio communication system 1 may include a base station 11 that forms a macro cell C1 with a relatively wide coverage, and base stations 12 (12a to 12c) that are disposed within the macro cell C1 and that form small cells C2 narrower than the macro cell C1. A user terminal 20 may be positioned in at least one cell. The arrangement, number, and the like of cells and the user terminals 20 are not limited to the aspects illustrated in the drawings. Hereinafter, the base stations 11 and 12 will be collectively referred to as base stations 10 unless specified otherwise.

The user terminal 20 may be connected to at least one of the plurality of base stations 10. The user terminal 20 may use at least one of carrier aggregation (CA) using a plurality of component carriers (CC) and dual connectivity (DC).

Each CC may be included in at least one of a first frequency range 1 (FR1) and a second frequency range 2 (FR2). The macro cell C1 may be included in FR1, and the small cell C2 may be included in FR2. For example, FR1 may be a frequency range of 6 GHz or less (sub-6 GHz), and FR2 may be a frequency range higher than 24 GHz (above-24 GHz). Note that the frequency ranges, definitions, and the like of FR1 and FR2 are not limited thereto, and, for example, FR1 may correspond to a frequency range higher than FR2.

Further, the user terminal 20 may perform communication in each CC using at least one of time division duplex (TDD) and frequency division duplex (FDD).

The plurality of base stations 10 may be connected by wire (for example, an optical fiber or an X2 interface in compliance with common public radio interface (CPRI)) or wirelessly (for example, NR communication). For example, when NR communication is used as a backhaul between the base stations 11 and 12, the base station 11 corresponding to a higher-level station may be referred to as an integrated access backhaul (IAB) donor, and the base station 12 corresponding to a relay station (relay) may be referred to as an IAB node.

The base station 10 may be connected to a core network 30 via another base station 10 or directly. The core network 30 may include, for example, at least one of evolved packet core (EPC), 5G core network (5GCN), next generation core (NGC), and the like.

The user terminal 20 may be a terminal corresponding to at least one of communication methods such as LTE, LTE-A, and 5G.

In the radio communication system 1, a radio access method based on orthogonal frequency division multiplexing (OFDM) may be used. For example, in at least one of downlink (DL) and uplink (UL), cyclic prefix OFDM (CP-OFDM), discrete Fourier transform spread OFDM (DFT-s-OFDM), orthogonal frequency division multiple access (OFDMA), single carrier frequency division multiple access (SC-FDMA), and the like may be used.

The radio access method may be referred to as a waveform. Note that in the radio communication system 1, another radio access method (for example, another single carrier transmission method or another multi-carrier transmission method) may be used as the UL and DL radio access method.

In the radio communication system 1, as a downlink channel, a downlink shared channel (physical downlink shared channel (PDSCH)) shared by each user terminal 20, a broadcast channel (physical broadcast channel (PBCH)), a downlink control channel (physical downlink control channel (PDCCH)), or the like may be used.

Further, in the radio communication system 1, as an uplink channel, an uplink shared channel (physical uplink shared channel (PUSCH)) shared by each user terminal 20, an uplink control channel (physical uplink control channel (PUCCH)), a random access channel (physical random access channel (PRACH)), or the like may be used.

User data, higher layer control information, and a system information block (SIB) and the like are transmitted by the PDSCH. User data, higher layer control information, and the like may be transmitted on the PUSCH. Further, the PBCH may transmit a master information block (MIB).

The PDCCH may transmit lower layer control information. The lower layer control information may include, for example, downlink control information (DCI) including scheduling information of at least one of the PDSCH and the PUSCH.

Note that DCI for scheduling the PDSCH may be referred to as DL assignment, DL DCI, or the like, and DCI for scheduling the PUSCH may be referred to as UL grant, UL DCI, or the like. Note that the PDSCH may be replaced with DL data, and the PUSCH may be replaced with UL data.

A control resource set (CORESET) and a search space may be used to detect the PDCCH. The CORESET corresponds to a resource that searches for DCI. The search space corresponds to a search area and a search method for PDCCH candidates. One CORESET may be associated with one or more search spaces. The UE may monitor the CORESET associated with a certain search space on the basis of search space configuration.

One search space may correspond to a PDCCH candidate corresponding to one or a plurality of aggregation levels. One or more search spaces may be referred to as a search space set. Note that "search space", "search space set", "search space configuration", "search space set configuration", "CORESET", "CORESET configuration", and the like in the present disclosure may be replaced with each other.

Uplink control information (UCI) including at least one of channel state information (CSI), delivery confirmation information (which may be referred to as, for example, hybrid automatic repeat request acknowledgement (HARQ-ACK), ACK/NACK, or the like), scheduling request (SR), and the like may be transmitted by the PUCCH. By means of the PRACH, a random access preamble for establishing a connection with a cell may be transmitted.

Note that in the present disclosure, downlink, uplink, and the like may be expressed without "link". Further, various channels may be expressed without adding "physical" at the beginning thereof.

In the radio communication system 1, a synchronization signal (SS), a downlink reference signal (DL-RS), and the like may be transmitted. In the radio communication systems 1, a cell-specific reference signal (CRS), a channel state information reference signal (CSI-RS), a demodulation reference signal (DMRS), a positioning reference signal (PRS), a phase tracking reference signal (PTRS), and the like may be transmitted as the DL-RS.

The synchronization signal may be, for example, at least one of a primary synchronization signal (PSS) and a secondary synchronization signal (SSS). A signal block including the SS (PSS or SSS) and the PBCH (and the DMRS for the PBCH) may be referred to as an SS/PBCH block, an SS block (SSB), or the like. Note that the SS, the SSB, or the like may also be referred to as a reference signal.

Further, in the radio communication system 1, a sounding reference signal (SRS), a demodulation reference signal (DMRS), and the like may be transmitted as an uplink reference signal (UL-RS). Note that, the DMRS may be referred to as a "user terminal-specific reference signal (UE-specific reference signal)".

(Base Station)

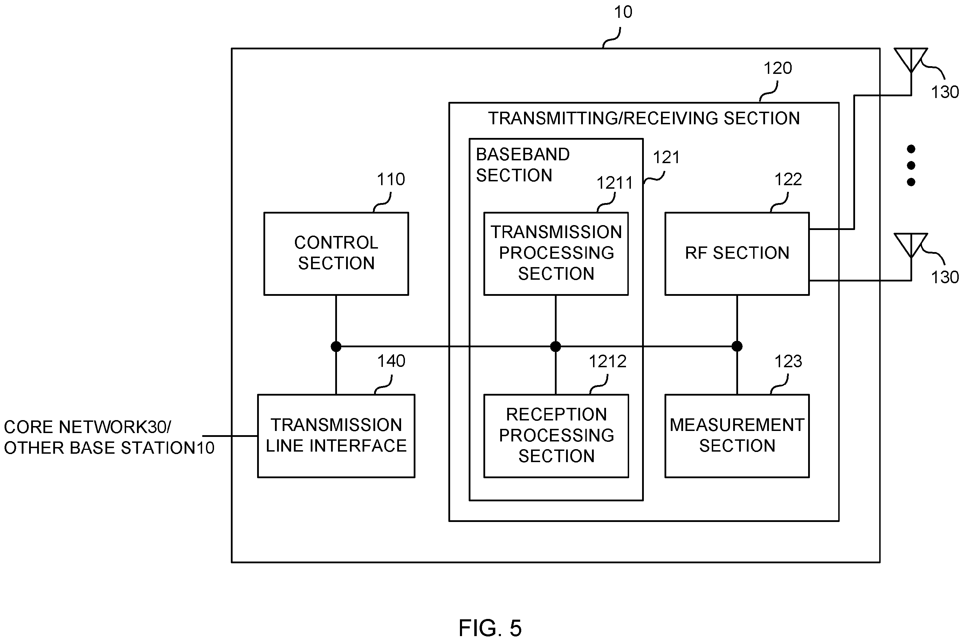

Fig. 5 is a diagram illustrating an example of a configuration of the base station according to an embodiment. The base station 10 includes a control section 110, a transmitting/receiving section 120, a transmission/reception antenna 130, and a transmission line interface 140. Note that one or more of the control sections 110, one or more of the transmitting/receiving sections 120, one or more of the transmission/reception antennas 130, and one or more of the transmission line interfaces 140 may be included.

Note that, although this example primarily indicates functional blocks of characteristic parts of the present embodiment, it may be assumed that the base station 10 has other functional blocks that are necessary for radio communication as well. A part of processing of each section described below may be omitted.

The control section 110 controls the entire base station 10. The control section 110 can be configured by a controller, a control circuit, or the like, which is described on the basis of common recognition in the technical field to which the present disclosure relates.

The control section 110 may control signal generation, scheduling (for example, resource assignment or mapping), and the like. The control section 110 may control transmission/reception, measurement, and the like using the transmitting/receiving section 120, the transmission/reception antenna 130, and the transmission line interface 140. The control section 110 may generate data to be transmitted as a signal, control information, a sequence, and the like, and may transfer the data, the control information, the sequence, and the like to the transmitting/receiving section 120. The control section 110 may perform call processing (such as configuration or release) of a communication channel, management of the state of the base station 10, and management of a radio resource.

The transmitting/receiving section 120 may include a baseband section 121, a radio frequency (RF) section 122, and a measurement section 123. The baseband section 121 may include a transmission processing section 1211 and a reception processing section 1212. The transmitting/receiving section 120 can be configured by a transmitter/receiver, an RF circuit, a base band circuit, a filter, a phase shifter, a measurement circuit, a transmission/reception circuit, and the like, which are described on the basis of common recognition in the technical field to which the present disclosure relates.

The transmitting/receiving section 120 may be configured as an integrated transmitting/receiving section, or may be constituted by a transmitting section and a receiving section. The transmitting section may include the transmission processing section 1211 and the RF section 122. The receiving section may be configured by the reception processing section 1212, the RF section 122, and the measurement section 123.

The transmission/reception antenna 130 can be configured by an antenna described on the basis of common recognition in the technical field to which the present disclosure relates, for example, an array antenna.

The transmitting/receiving section 120 may transmit the above-described downlink channel, synchronization signal, downlink reference signal, and the like. The transmitting/receiving section 120 may receive the above-described uplink channel, uplink reference signal, and the like.

The transmitting/receiving section 120 may form at least one of a transmission beam and a reception beam by using digital beam forming (for example, precoding), analog beam forming (for example, phase rotation), and the like.

The transmitting/receiving section 120 (transmission processing section 1211) may perform packet data convergence protocol (PDCP) layer processing, radio link control (RLC) layer processing (for example, RLC retransmission control), medium access control (MAC) layer processing (for example, HARQ retransmission control), and the like, for example, on data or control information acquired from the control section 110 to generate a bit string to be transmitted.

The transmitting/receiving section 120 (transmission processing section 1211) may perform transmission processing such as channel encoding (which may include error correcting encoding), modulation, mapping, filtering processing, discrete Fourier transform (DFT) processing (if necessary), inverse fast Fourier transform (IFFT) processing, precoding, or digital-analog transform on the bit string to be transmitted, and may output a base band signal.

The transmitting/receiving section 120 (RF section 122) may perform modulation to a radio frequency band, filtering processing, amplification, and the like on the base band signal, and may transmit a signal in the radio frequency band via the transmission/reception antenna 130.

On the other hand, the transmitting/receiving section 120 (RF section 122) may perform amplification, filtering processing, demodulation to a base band signal, and the like on the signal in the radio frequency band received by the transmission/reception antenna 130.

The transmitting/receiving section 120 (reception processing section 1212) may apply reception processing such as analog-digital transform, fast Fourier transform (FFT) processing, inverse discrete Fourier transform (IDFT) processing (if necessary), filtering processing, demapping, demodulation, decoding (which may include error correcting decoding), MAC layer processing, RLC layer processing, or PDCP layer processing on the acquired base band signal to acquire user data and the like.

The transmitting/receiving section 120 (measurement section 123) may perform measurement on the received signal. For example, the measurement section 123 may perform radio resource management (RRM), channel state information (CSI) measurement, and the like on the basis of the received signal. The measurement section 123 may measure received power (for example, reference signal received power (RSRP)), received quality (for example, reference signal received quality (RSRQ), a signal to interference plus noise ratio (SINR), a signal to noise ratio (SNR)), signal strength (for example, received signal strength indicator (RSSI)), propagation path information (for example, CSI), and the like. The measurement result may be output to the control section 110.

The transmission line interface 140 may transmit/receive a signal (backhaul signaling) to and from an apparatus included in the core network 30, other base stations 10, and the like, and may acquire, transmit, and the like user data (user plane data), control plane data, and the like for the user terminal 20.

Note that the transmitting section and the receiving section of the base station 10 in the present disclosure may be configured by at least one of the transmitting/receiving section 120, the transmission/reception antenna 130, and the transmission line interface 140.

When a beam failure is detected, the transmitting/receiving section 120 may receive a contention-based random access preamble for beam failure recovery.

In the case where an uplink control channel is received in the period from when a given period has elapsed from the transmission of a downlink control channel in a contention-based random access procedure for beam failure recovery to when information regarding uplink control channel spatial relation information is transmitted, the control section 110 may determine that the same spatial filter as that for the random access preamble last transmitted in the cell where the uplink control channel is to be transmitted is applied to the uplink control channel.

(User Terminal)

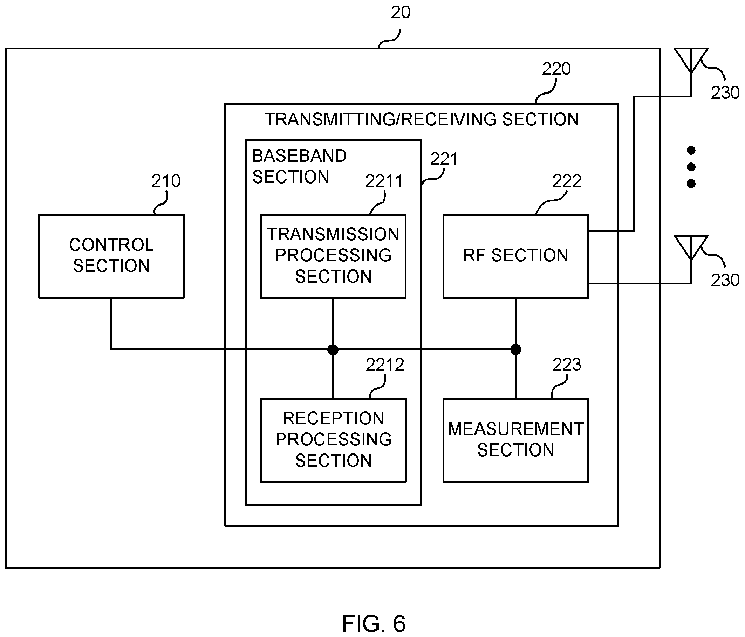

Fig. 6 is a diagram illustrating an example of a configuration of the user terminal according to an embodiment. The user terminal 20 includes a control section 210, a transmitting/receiving section 220, and a transmission/reception antenna 230. Note that one or more of the control sections 210, one or more of the transmitting/receiving sections 220, and one or more of the transmission/reception antennas 230 may be included.

Note that, although this example mainly describes a functional block which is a characteristic part of the present embodiment, it may be assumed that the user terminal 20 also has another functional block necessary for radio communication. A part of processing of each section described below may be omitted.

The control section 210 controls the entire user terminal 20. The control section 210 can be constituted by a controller, a control circuit, or the like, which is described based on common recognition in the technical field to which the present disclosure relates.

The control section 210 may control signal generation, mapping, and the like. The control section 210 may control transmission/reception, measurement, and the like using the transmitting/receiving section 220 and the transmission/reception antenna 230. The control section 210 may generate data to be transmitted as a signal, control information, a sequence, and the like, and may transfer the data, the control information, the sequence, and the like to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted by a transmitter/receiver, an RF circuit, a baseband circuit, a filter, a phase shifter, a measurement circuit, a transmission/reception circuit, and the like, which are described based on common recognition in the technical field to which the present disclosure relates.

The transmitting/receiving section 220 may be constituted as an integrated transmitting/receiving section, or may be constituted by a transmitting section and a receiving section. The transmitting section may include the transmission processing section 2211 and the RF section 222. The receiving section may be constituted by the reception processing section 2212, the RF section 222, and the measurement section 223.

The transmission/reception antenna 230 can be constituted by an antenna described based on common recognition in the technical field to which the present disclosure relates, for example, an array antenna.

The transmitting/receiving section 220 may receive the above-described downlink channel, synchronization signal, downlink reference signal, and the like. The transmitting/receiving section 220 may transmit the above-described uplink channel, uplink reference signal, and the like.

The transmitting/receiving section 220 may form at least one of a transmission beam and a reception beam by using digital beam forming (for example, precoding), analog beam forming (for example, phase rotation), and the like.

The transmitting/receiving section 220 (transmission processing section 2211) may perform PDCP layer processing, RLC layer processing (for example, RLC retransmission control), MAC layer processing (for example, HARQ retransmission control), and the like, for example, on data acquired from the control section 210 or control information to generate a bit string to be transmitted.

The transmitting/receiving section 220 (transmission processing section 2211) may perform transmission processing such as channel encoding (which may include error correction encoding), modulation, mapping, filtering processing, DFT processing (if necessary), IFFT processing, precoding, or digital-analog transform on a bit string to be transmitted, and may output a baseband signal.

Note that whether or not to apply DFT processing may be determined based on configuration of transform precoding. When transform precoding is enabled for a channel (for example, PUSCH), the transmitting/receiving section 220 (transmission processing section 2211) may perform DFT processing as the transmission processing in order to transmit the channel using a DFT-s-OFDM waveform. When transform precoding is not enabled for a channel (for example, PUSCH), the transmitting/receiving section 220 (transmission processing section 2211) does not have to perform DFT processing as the transmission processing.

The transmitting/receiving section 220 (RF section 222) may perform modulation to a radio frequency band, filtering processing, amplification, and the like on the baseband signal, and may transmit a signal in the radio frequency band via the transmission/reception antenna 230.

Meanwhile, the transmitting/receiving section 220 (RF section 222) may perform amplification, filtering processing, demodulation to a baseband signal, and the like on the signal in the radio frequency band received by the transmission/reception antenna 230.

The transmitting/receiving section 220 (reception processing section 2212) may acquire user data and the like by applying reception processing such as analog-digital transform, FFT processing, IDFT processing (if necessary), filtering processing, demapping, demodulation, decoding (which may include error correction decoding), MAC layer processing, RLC layer processing, or PDCP layer processing on the acquired baseband signal.

The transmitting/receiving section 220 (measurement section 223) may perform measurement on the received signal. For example, the measurement section 223 may perform RRM measurement, CSI measurement, and the like on the basis of the received signal. The measurement section 223 may measure received power (for example, RSRP), received quality (for example, RSRQ, SINR, or SNR), signal strength (for example, RSSI), propagation path information (for example, CSI), and the like. The measurement result may be output to the control section 210.

Note that the transmitting section and the receiving section of the user terminal 20 in the present disclosure may include at least one of the transmitting/receiving section 220 and the transmission/reception antenna 230.

When a beam failure is detected, the transmitting/receiving section 220 may transmit a contention-based random access preamble for beam failure recovery.

In the case where an uplink control channel is transmitted in the period from when a given period has elapsed from the reception of a downlink control channel in a contention-based random access procedure for beam failure recovery to when information regarding uplink control channel spatial relation information is received, the control section 210 may perform control to apply, to the uplink control channel, the same spatial filter as that for the random access preamble last transmitted in the cell where the uplink control channel is to be transmitted.

The downlink control channel may be a downlink control channel transmitted in response to a random access preamble, or a downlink control channel used for transmission of downlink control information CRC-scrambled by an RNTI for random access.

The downlink control channel may be a downlink control channel corresponding to message 4 in a contention-based random access procedure, or a downlink control channel used for transmission of downlink control information CRC-scrambled by a cell-specific RNTI.

The control section 210 may determine the uplink control channel transmission power on the basis of an index of a synchronization signal block notified from the network.

(Hardware Configuration)

Note that the block diagrams that have been used to describe the above embodiments illustrate blocks in functional units. These functional blocks (components) may be implemented in arbitrary combinations of at least one of hardware or software. Further, the method for implementing each functional block is not particularly limited. That is, each functional block may be implemented by a single apparatus physically or logically aggregated, or may be implemented by directly or indirectly connecting two or more physically or logically separate apparatuses (in a wired manner, a wireless manner, or the like, for example) and using these apparatuses. The functional blocks may be implemented by combining software with the above-described single apparatus or the above-described plurality of apparatuses.

Here, the function includes, but is not limited to, determining, judging, calculating, computing, processing, deriving, investigating, searching, ascertaining, receiving, transmitting, outputting, accessing, solving, selecting, choosing, establishing, comparing, assuming, expecting, regarding, broadcasting, notifying, communicating, forwarding, configuring, reconfiguring, allocating, mapping, assigning, and the like. For example, a functional block (component) that has a transmission function may be referred to as a transmitting section (transmitting unit), a transmitter, and the like. In any case, as described above, the implementation method is not particularly limited.

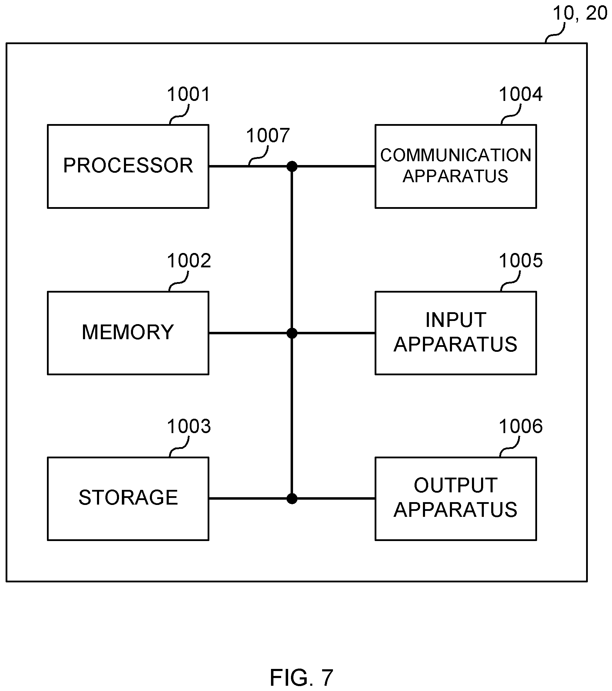

For example, the base station, the user terminal, or the like according to one embodiment of the present disclosure may function as a computer that executes the processing of the radio communication method in the present disclosure. Fig. 7 is a diagram illustrating an example of the hardware configuration of the base station and the user terminal according to an embodiment. Physically, the above-described base station 10 and user terminal 20 may be configured as a computer apparatus that includes a processor 1001, a memory 1002, a storage 1003, a communication apparatus 1004, an input apparatus 1005, an output apparatus 1006, a bus 1007, and the like.

Note that in the present disclosure, the terms such as an apparatus, a circuit, a device, a section, or a unit can be replaced with each other. The hardware configuration of the base station 10 and the user terminal 20 may include one or more of each of the apparatuses illustrated in the drawings, or does not have to include some apparatuses.

For example, although only one processor 1001 is shown, a plurality of processors may be provided. Further, the processing may be executed by one processor, or the processing may be executed by two or more processors simultaneously or sequentially, or by using other methods. Note that the processor 1001 may be implemented with one or more chips.

Each of functions of the base station 10 and the user terminal 20 is, for example, implemented by causing given software (program) to be read on hardware such as the processor 1001 or the memory 1002 to thereby cause the processor 1001 to perform operation, control communication via the communication apparatus 1004, and control at least one of reading or writing of data from or in the memory 1002 and the storage 1003.

The processor 1001 may control the whole computer by, for example, running an operating system. The processor 1001 may be configured by a central processing unit (CPU) including an interface with peripheral equipment, a control apparatus, an operation apparatus, a register, and the like. For example, at least a part of the above-described control section 110 (210), transmitting/receiving section 120 (220), and the like may be implemented by the processor 1001.

Furthermore, the processor 1001 reads programs (program code), software modules, data, and so on from at least one of the storage 1003 or the communication apparatus 1004 into the memory 1002, and executes various types of processing according to these. As the program, a program that causes a computer to execute at least a part of the operation described in the above-described embodiment is used. For example, the control section 110 (210) may be implemented by a control program that is stored in the memory 1002 and that operates on the processor 1001, and other functional blocks may be implemented likewise.

The memory 1002 is a computer-readable recording medium, and may include, for example, at least one of a read only memory (ROM), an erasable programmable ROM (EPROM), an electrically EPROM (EEPROM), a random access memory (RAM), or other appropriate storage media. The memory 1002 may be referred to as a register, a cache, a main memory (primary storage apparatus), and the like. The memory 1002 can store a program (program code), a software module, and the like, which are executable for implementing the radio communication method according to one embodiment of the present disclosure.

The storage 1003 is a computer-readable recording medium, and may include, for example, at least one of a flexible disk, a floppy (registered trademark) disk, a magneto-optical disk (for example, a compact disc ROM (CD-ROM) and the like), a digital versatile disc, a Blu-ray (registered trademark) disk), a removable disk, a hard disk drive, a smart card, a flash memory device (for example, a card, a stick, or a key drive), a magnetic stripe, a database, a server, or other appropriate storage media. The storage 1003 may be referred to as "secondary storage apparatus".

The communication apparatus 1004 is hardware (transmitting/receiving device) for performing inter-computer communication via at least one of a wired network or a wireless network, and for example, is referred to as "network device", "network controller", "network card", "communication module", and the like. The communication apparatus 1004 may include a high frequency switch, a duplexer, a filter, a frequency synthesizer, and the like in order to implement, for example, at least one of frequency division duplex (FDD) or time division duplex (TDD). For example, the transmitting/receiving section 120 (220), the transmission/reception antenna 130 (230), and the like described above may be implemented by the communication apparatus 1004. The transmitting/receiving section 120 (220) may be implemented in a physically or logically separated manner by the transmitting section 120a (220a) and the receiving section 120b (220b).

The input apparatus 1005 is an input device for receiving input from the outside (for example, a keyboard, a mouse, a microphone, a switch, a button, a sensor and so on). The output apparatus 1006 is an output device that performs output to the outside (for example, a display, a speaker, a light emitting diode (LED) lamp, or the like). Note that the input apparatus 1005 and the output apparatus 1006 may be provided in an integrated structure (for example, a touch panel).

Furthermore, these pieces of apparatus, including the processor 1001, the memory 1002 and so on are connected by the bus 1007 so as to communicate information. The bus 1007 may be formed with a single bus, or may be formed with buses that vary between pieces of apparatus.

Further, the base station 10 and the user terminal 20 may include hardware such as a microprocessor, a digital signal processor (DSP), an application specific integrated circuit (ASIC), a programmable logic device (PLD), or a field programmable gate array (FPGA), and some or all of the functional blocks may be implemented by the hardware. For example, the processor 1001 may be implemented with at least one of these pieces of hardware.

(Variations)

Note that terms described in the present disclosure and terms necessary for understanding the present disclosure may be replaced with terms that have the same or similar meanings. For example, a channel, a symbol, and a signal (signal or signaling) may be replaced interchangeably. Further, the signal may be a message. The reference signal can be abbreviated as an RS, and may be referred to as a pilot, a pilot signal, and the like, depending on which standard applies. Further, a component carrier (CC) may be referred to as a cell, a frequency carrier, a carrier frequency, and the like.

A radio frame may include one or more periods (frames) in the time domain. Each of the one or more periods (frames) included in the radio frame may be referred to as a subframe. Further, the subframe may include one or more slots in the time domain. The subframe may be a fixed time duration (for example, 1 ms) that is not dependent on numerology.

Here, the numerology may be a communication parameter used for at least one of transmission or reception of a certain signal or channel. For example, the numerology may indicate at least one of subcarrier spacing (SCS), a bandwidth, a symbol length, a cyclic prefix length, a transmission time interval (TTI), the number of symbols per TTI, a radio frame configuration, specific filtering processing performed by a transceiver in the frequency domain, specific windowing processing performed by a transceiver in the time domain, and the like.

The slot may include one or more symbols in the time domain (orthogonal frequency division multiplexing (OFDM) symbols, single carrier frequency division multiple access (SC-FDMA) symbols, and the like). Also, a slot may be a time unit based on numerology.

The slot may include a plurality of mini slots. Each mini slot may include one or more symbols in the time domain. Further, the mini slot may be referred to as a sub-slot. Each mini slot may include fewer symbols than the slot. A PDSCH (or PUSCH) transmitted in a time unit larger than the mini slot may be referred to as "PDSCH (PUSCH) mapping type A". A PDSCH (or PUSCH) transmitted using the mini slot may be referred to as "PDSCH (PUSCH) mapping type B".

A radio frame, a subframe, a slot, a mini slot and a symbol all represent the time unit in signal communication. The radio frame, the subframe, the slot, the mini slot, and the symbol may be called by other applicable names, respectively. Note that time units such as the frame, the subframe, the slot, the mini slot, and the symbol in the present disclosure may be interchangeable.

For example, one subframe may be referred to as a TTI, a plurality of consecutive subframes may be referred to as a TTI, or one slot or one mini slot may be referred to as a TTI. That is, at least one of the subframe or the TTI may be a subframe (1 ms) in the existing LTE, may be a period shorter than 1 ms (for example, one to thirteen symbols), or may be a period longer than 1 ms. Note that the unit to represent the TTI may be referred to as a "slot", a "mini slot" and so on, instead of a "subframe".

Here, a TTI refers to the minimum time unit of scheduling in radio communication, for example. For example, in the LTE system, a base station performs scheduling to allocate radio resources (a frequency bandwidth, transmission power, and the like that can be used in each user terminal) to each user terminal in TTI units. Note that the definition of TTIs is not limited to this.

The TTI may be the transmission time unit of channel-encoded data packets (transport blocks), code blocks, codewords, or the like, or may be the unit of processing in scheduling, link adaptation, or the like. Note that when the TTI is given, a time interval (for example, the number of symbols) in which the transport block, the code block, the codeword, or the like is actually mapped may be shorter than the TTI.

Note that, when one slot or one mini slot is referred to as a "TTI", one or more TTIs (that is, one or multiple slots or one or more mini slots) may be the minimum time unit of scheduling. Also, the number of slots (the number of mini slots) to constitute this minimum time unit of scheduling may be controlled.

A TTI having a time duration of 1 ms may also be referred to as a usual TTI (TTI in 3GPP Rel. 8 to 12), a normal TTI, a long TTI, a usual subframe, a normal subframe, a long subframe, a slot, or the like. A TTI shorter than the usual TTI may be referred to as a shortened TTI, a short TTI, a partial TTI (or fractional TTI), a shortened subframe, a short subframe, a mini slot, a sub-slot, a slot, or the like.

Note that a long TTI (for example, a usual TTI, a subframe, etc.) may be replaced with a TTI having a time duration exceeding 1 ms, and a short TTI (for example, a shortened TTI) may be replaced with a TTI having a TTI duration less than the TTI duration of a long TTI and not less than 1 ms.

A resource block (RB) is the unit of resource allocation in the time domain and the frequency domain, and may include one or more contiguous subcarriers in the frequency domain. The number of subcarriers included in the RB may be the same regardless of the numerology, and may be twelve, for example. The number of subcarriers included in the RB may be determined on the basis of the numerology.

Also, an RB may include one or more symbols in the time domain, and may be one slot, one mini slot, one subframe or one TTI in length. One TTI, one subframe, and the like each may include one or more resource blocks.

Note that one or more RBs may be referred to as a physical resource block (PRB), a subcarrier group (SCG), a resource element group (REG), a PRB pair, an RB pair, and the like.

Furthermore, a resource block may include one or more resource elements (REs). For example, one RE may be a radio resource field of one subcarrier and one symbol.

A bandwidth part (BWP) (which may be referred to as a partial bandwidth or the like) may represent a subset of contiguous common resource blocks (RBs) for a certain numerology in a certain carrier. Here, the common RB may be specified by the index of the RB based on a common reference point of the carrier. The PRB may be defined in a certain BWP and be numbered within the BWP.

The BWP may include a BWP for UL (UL BWP) and a BWP for DL (DL BWP). For the UE, one or more BWPs may be configured within one carrier.

At least one of the configured BWPs may be active, and the UE does not need to assume to transmit or receive a given signal/channel outside the active BWP. Note that "cell", "carrier", and the like in the present disclosure may be replaced with "BWP".

Note that the structures of radio frames, subframes, slots, mini slots, symbols and so on described above are merely examples. For example, configurations such as the number of subframes included in a radio frame, the number of slots per subframe or radio frame, the number of mini slots included in a slot, the number of symbols and RBs included in a slot or a mini slot, the number of subcarriers included in an RB, the number of symbols in a TTI, the symbol length, the length of cyclic prefix (CP), and the like can be variously changed.

Furthermore, information, a parameter, or the like described in the present disclosure may be represented in absolute values, represented in relative values with respect to given values, or represented by using other corresponding information. For example, a radio resource may be specified by a given index.

The names used for parameters and the like in the present disclosure are in no respect limiting. Further, any mathematical expression or the like that uses these parameters may differ from those explicitly disclosed in the present disclosure. Since various channels (PUCCH, PDCCH, and the like) and information elements can be identified by any suitable names, various names assigned to these various channels and information elements are not restrictive names in any respect.

The information, signals, and the like described in the present disclosure may be represented by using a variety of different technologies. For example, data, instructions, commands, information, signals, bits, symbols and chips, all of which may be referenced throughout the herein-contained description, may be represented by voltages, currents, electromagnetic waves, magnetic fields or particles, optical fields or photons, or any combination of these.

Further, information, signals, and the like can be output in at least one of a direction from higher layers to lower layers or a direction from lower layers to higher layers. Information, signals and so on may be input and output via a plurality of network nodes.

The information, signals and so on that are input and/or output may be stored in a specific location (for example, in a memory), or may be managed in a control table. The information, signals, and the like to be input and output can be overwritten, updated, or appended. The output information, signals, and the like may be deleted. The information, signals and the like that are input may be transmitted to other pieces of apparatus.

Notification of information may be performed not only by using the aspects/embodiments described in the present disclosure but also using another method. For example, the notification of information in the present disclosure may be performed by using physical layer signaling (for example, downlink control information (DCI) or uplink control information (UCI)), higher layer signaling (for example, radio resource control (RRC) signaling, broadcast information (master information block (MIB)), system information block (SIB), or the like), or medium access control (MAC) signaling, another signal, or a combination thereof.

Note that the physical layer signaling may be referred to as Layer 1/Layer 2 (L1/L2) control information (L1/L2 control signal), L1 control information (L1 control signal), and the like. Further, the RRC signaling may be referred to as an RRC message, and may be, for example, an RRC connection setup message, an RRC connection reconfiguration message, and the like. Further, notification of the MAC signaling may be performed using, for example, an MAC control element (CE).

Also, reporting of given information (for example, reporting of information to the effect that "X holds") does not necessarily have to be sent explicitly, and can be sent implicitly (for example, by not reporting this piece of information, by reporting another piece of information, and so on) .

Decisions may be made in values represented by one bit (0 or 1), may be made in Boolean values that represent true or false, or may be made by comparing numerical values (for example, comparison against a given value).

Software, whether referred to as "software", "firmware", "middleware", "microcode" or "hardware description language", or called by other names, should be interpreted broadly, to mean instructions, instruction sets, code, code segments, program codes, programs, subprograms, software modules, applications, software applications, software packages, routines, subroutines, objects, executable files, execution threads, procedures, functions and the like.

Also, software, instructions, information and so on may be transmitted and received via communication media. For example, when software is transmitted from a website, a server, or another remote source by using at least one of a wired technology (coaxial cable, optical fiber cable, twisted pair, digital subscriber line (DSL), or the like) and a wireless technology (infrared rays, microwaves, and the like), at least one of the wired technology or the wireless technology is included within the definition of a transmission medium.

The terms "system" and "network" used in the present disclosure can be used interchangeably. The "network" may mean an apparatus (for example, a base station) included in the network.

In the present disclosure, terms such as "precoding", "precoder", "weight (precoding weight)", "quasi-co-location (QCL)", "transmission configuration indication state (TCI state)", "spatial relation", "spatial domain filter", "transmission power", "phase rotation", "antenna port", "antenna port group", "layer", "number of layers", "rank", "resource", "resource set", "resource group", "beam", "beam width", "beam angle", "antenna", "antenna element", and "panel" can be used interchangeably.

In the present disclosure, terms such as "base station (BS)", "radio base station", "fixed station", "NodeB", "eNodeB (eNB)", "gNodeB (gNB)", "access point", "transmission point (TP)", "reception point (RP)", "transmission/reception point (TRP)", "panel", "cell", "sector", "cell group", "carrier", and "component carrier", can be used interchangeably. The base station may be referred to as a term such as a macro cell, a small cell, a femto cell, or a pico cell.

The base station can accommodate one or more (for example, three) cells. In a case where the base station accommodates a plurality of cells, the entire coverage area of the base station can be partitioned into a plurality of smaller areas, and each smaller area can provide communication services through a base station subsystem (for example, small base station for indoors (remote radio head (RRH))). The term "cell" or "sector" refers to a part or the whole of a coverage area of at least one of a base station or a base station subsystem that performs a communication service in this coverage.

In the present disclosure, the terms such as "mobile station (MS)", "user terminal", "user equipment (UE)", and "terminal" can be used interchangeably.

The mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other appropriate terms.

At least one of the base station or the mobile station may be referred to as a transmitting apparatus, a receiving apparatus, a radio communication apparatus, and the like. Note that at least one of the base station or the mobile station may be a device mounted on a moving object, a moving object itself, and the like. The moving object may be a transportation (for example, a car, an airplane, or the like), an unmanned moving object (for example, a drone, an autonomous car, or the like), or a (manned or unmanned) robot. Note that at least one of the base station or the mobile station also includes an apparatus that does not necessarily move during a communication operation. For example, at least one of the base station or the mobile station may be an Internet of Things (IoT) device such as a sensor.

Further, the base station in the present disclosure may be replaced with the user terminal. For example, each aspect/embodiment of the present disclosure may be applied to a configuration in which communication between the base station and the user terminal is replaced with communication among a plurality of user terminals (which may be referred to as, for example, device-to-device (D2D), vehicle-to-everything (V2X), and the like). In this case, the user terminal 20 may have the function of the above-described base station 10. Further, terms such as "uplink" and "downlink" may be replaced with terms corresponding to communication between terminals (for example, "side"). For example, the uplink channel, the downlink channel, and the like may be replaced with a side channel.

Likewise, the user terminals in the present disclosure may be interpreted as base stations. In this case, the base stations 10 may have the functions of the user terminals 20 described above.

In the present disclosure, an operation performed by a base station may be performed by an upper node thereof in some cases. In a network including one or more network nodes with base stations, it is clear that various operations performed for communication with a terminal can be performed by a base station, one or more network nodes (examples of which include but are not limited to mobility management entity (MME) and serving-gateway (S-GW)) other than the base station, or a combination thereof.

The aspects/embodiments illustrated in the present disclosure may be used individually or in combinations, which may be switched depending on the mode of implementation. Further, the order of processing procedures, sequences, flowcharts, and the like of the aspects/embodiments described in the present disclosure may be re-ordered as long as there is no inconsistency. For example, regarding the methods described in the present disclosure, elements of various steps are presented using an illustrative order, and are not limited to the presented specific order.

Each aspect/embodiment described in the present disclosure may be applied to a system using long term evolution (LTE), LTE-advanced (LTE-A), LTE-beyond (LTE-B), SUPER 3G, IMT-Advanced, 4th generation mobile communication system (4G), 5th generation mobile communication system (5G), future radio access (FRA), new radio access technology (RAT), new radio (NR), new radio access (NX), future generation radio access (FX), global system for mobile communications (GSM (registered trademark)), CDMA2000, ultra mobile broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), or another appropriate radio communication method, a next generation system expanded on the basis of these, and the like. Further, a plurality of systems may be combined and applied (for example, a combination of LTE or LTE-A and 5G, and the like).

The phrase "based on" as used in the present disclosure does not mean "based only on", unless otherwise specified. In other words, the phrase "based on" means both "based only on" and "based at least on".

Any reference to an element using designations such as "first" and "second" used in the present disclosure does not generally limit the amount or order of these elements. These designations can be used in the present disclosure, as a convenient way of distinguishing between two or more elements. In this way, reference to the first and second elements does not imply that only two elements may be employed, or that the first element must precede the second element in some way.

The term "determining" as used in the present disclosure may include a wide variety of operations. For example, "determining" may be interpreted to mean making judgements and determinations related to judging, calculating, computing, processing, deriving, investigating, looking up, search, inquiry (for example, looking up in a table, database, or another data structure), ascertaining, and the like.

Furthermore, to "judge" and "determine" as used herein may be interpreted to mean making judgements and determinations related to receiving (for example, receiving information), transmitting (for example, transmitting information), inputting, outputting, accessing (for example, accessing data in a memory) and so on.

In addition, to "judge" and "determine" as used herein may be interpreted to mean making judgements and determinations related to resolving, selecting, choosing, establishing, comparing and so on. In other words, to "judge" and "determine" as used herein may be interpreted to mean making judgements and determinations related to some action.

Furthermore, "determining" may be replaced with "assuming", "expecting", "considering", and the like.

As used in the present disclosure, the terms "connected" and "coupled", or any variation of these terms, mean all direct or indirect connections or coupling between two or more elements, and may include the presence of one or more intermediate elements between two elements that are "connected" or "coupled" to each other. The coupling or connection between the elements may be physical, logical, or a combination of these. For example, "connection" may be replaced with "access".

As used in the present disclosure, when two elements are connected, these elements may be considered to be "connected" or "coupled" to each other by using one or more electrical wires, cables, printed electrical connections, and the like, and, as some non-limiting and non-inclusive examples, by using electromagnetic energy and the like having wavelengths in the radio frequency domain, microwave, and optical (both visible and invisible) domains.

In the present disclosure, the phrase "A and B are different" may mean "A and B are different from each other". Note that the phrase may mean that "A and B are different from C". Terms such as "leave", "coupled", or the like may also be interpreted in the same manner as "different".

In a case where terms such as "include", "including", or a variation of these are used in the present disclosure, these terms are intended to be inclusive similarly to a case where "comprising" is used. Furthermore, the term "or" as used in the present disclosure is intended to be not an exclusive-OR.

In the present disclosure, when articles, such as "a", "an", and "the" are added in English translation, the present disclosure may include the plural forms of nouns that follow these articles.

Now, although the invention according to the present disclosure has been described in detail above, it is obvious to a person skilled in the art that the invention according to the present disclosure is by no means limited to the embodiments described in the present disclosure. The invention according to the present disclosure can be embodied with various corrections and in various modified aspects, without departing from the spirit and scope of the invention defined on the basis of the description of claims. Thus, the description of the present disclosure is for the purpose of explaining examples and does not bring any limiting meaning to the invention according to the present disclosure.

**Claims**

1. A terminal comprising:

a transmitting section that, when a beam failure is detected, transmits a contention-based random access preamble for recovery of the beam failure; and

a control section that, in a case where an uplink control channel is transmitted in a period from when a given period has elapsed from reception of a downlink control channel in a contention-based random access procedure for recovery of the beam failure to when information regarding uplink control channel spatial relation information is received, performs control to apply, to the uplink control channel, the same spatial filter as a spatial filter for a random access preamble last transmitted in a cell where the uplink control channel is to be transmitted.

2. The terminal according toclaim 11, wherein the downlink control channel is a downlink control channel transmitted in response to the random access preamble, or a downlink control channel used for transmission of downlink control information CRC-scrambled by an RNTI for random access.

3. The terminal according toclaim 11, wherein the downlink control channel is a downlink control channel corresponding to message 4 in the contention-based random access procedure, or a downlink control channel used for transmission of downlink control information CRC-scrambled by a cell-specific RNTI.

4. The terminal according to any one ofclaims 11 to 3, wherein the control section determines a transmission power of the uplink control channel on the basis of an index of a synchronization signal block notified from a network.

5. A radio communication method comprising:

a step of, when a beam failure is detected, transmitting a contention-based random access preamble for recovery of the beam failure; and

a step of, in a case where an uplink control channel is transmitted in a period from when a given period has elapsed from reception of a downlink control channel in a contention-based random access procedure for recovery of the beam failure to when information regarding uplink control channel spatial relation information is received, performing control to apply, to the uplink control channel, the same spatial filter as a spatial filter for a random access preamble last transmitted in a cell where the uplink control channel is to be transmitted.

6. A base station comprising:

a receiving section that, when a beam failure is detected, receives a contention-based random access preamble for recovery of the beam failure; and

a control section that, in a case where an uplink control channel is received in a period from when a given period has elapsed from transmission of a downlink control channel in a contention-based random access procedure for recovery of the beam failure to when information regarding uplink control channel spatial relation information is transmitted, determines that the same spatial filter as a spatial filter for a random access preamble last transmitted in a cell where the uplink control channel is to be transmitted is applied to the uplink control channel.

FIG. 1

FIG. 2

BASE STATION ————————————————————→

RAR (MESSAGE 2)

MESSAGE 4

UE ————————————————————→ TIME

PRACH

MESSAGE 3

GIVEN PERIOD

FIRST TIMING          SECOND TIMING

FIG. 3

EP 4 138 436 A1

FIG. 4

FIG. 5

EP 4 138 436 A1

FIG. 6

FIG. 7

| INTERNATIONAL SEARCH REPORT | International application No. |
|---|---|
| | PCT/JP2020/016966 |

**A. CLASSIFICATION OF SUBJECT MATTER**
H04W 16/28(2009.01)i; H04W 24/04(2009.01)i; H04W 72/04(2009.01)i; H04W 74/08(2009.01)i
FI: H04W16/28; H04W74/08; H04W72/04 136; H04W24/04
According to International Patent Classification (IPC) or to both national classification and IPC

**B. FIELDS SEARCHED**
Minimum documentation searched (classification system followed by classification symbols)
H04W16/28; H04W24/04; H04W72/04; H04W74/08

Documentation searched other than minimum documentation to the extent that such documents are included in the fields searched
| | |
|---|---|
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | WO 2020/066023 A1 (NTT DOCOMO, INC.) 02 April 2020 (2020-04-02) paragraphs [0017]-[0051] | 1–6 |
| Y | Moderator (APPLE), Feature Lead Summary #1 on L1-SINR and SCell BFR[online], 3GPP TSG RAN WG1 #100b_e R1-2002339, 14 April 2020, in particular, section 4.4 | 1–6 |

☐ Further documents are listed in the continuation of Box C. ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 21 October 2020 (21.10.2020) | 01 December 2020 (01.12.2020) |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

| International application No. |
| --- |
| PCT/JP2020/016966 |

| Patent Documents referred in the Report | Publication Date | Patent Family | Publication Date |
| --- | --- | --- | --- |
| WO 2020/066023 A1 | 02 Apr. 2020 | (Family: none) | |

Form PCT/ISA/210 (patent family annex) (January 2015)

**REFERENCES CITED IN THE DESCRIPTION**

**Non-patent literature cited in the description**

- Evolved Universal Terrestrial Radio Access (E-UTRA) and Evolved Universal Terrestrial Radio Access Network (E-UTRAN); Overall description; Stage 2 (Release 8). *3GPP TS 36.300 V8.12.0,* April 2010